# EUROPEAN PATENT SPECIFICATION

(11) **EP 4 129 724 B1**
(45) Date of publication and mention of the grant of the patent: **05.06.2024**
(21) Application number: 21189136.1
(22) Date of filing: 02.08.2021
(51) Int. Cl.: B60J 10/90, B60R 9/05, B60J 7/00

(54) **TILTED PANEL TOUCHING ROOF RAILS FOR BETTER AEROACOUSTICS**
GENEIGTE PLATTE MIT BERÜHRUNG DER DACHSCHIENEN FÜR VERBESSERTE AEROAKUSTIK
PANNEAU INCLINÉ TOUCHANT LES RAILS DE TOIT POUR UNE MEILLEURE AÉROACOUSTIQUE

(43) Date of publication of application: 08.02.2023
(73) Proprietor: Inalfa Roof Systems Group B.V., 5807 GW Oostrum (NL)
(72) Inventor: Nellen, Marcel Johan Christiaan, 5815 AR MERSELO (NL); Albers, Thomas Anton Martijnszoon, 5804 XJ Venray (NL)
(74) Representative: De Vries & Metman

(56) References cited:
- DE-A1-102013 218 387
- DE-C1- 4 142 265
- US-A- 5 362 122

## Description

The invention relates to an open roof system for a vehicle, and a vehicle comprising such open roof system.

An open roof system is well known. For instance, an open roof system which comprises a movable panel, which may be partly opening a roof opening and closing such roof opening. Such panel may be positioned in a so called "tilt" position in which the panel is lifted at its rear end upwardly but the panel at its front edge is still in an airtight engagement via the seal with the edge of the roof opening. Further in this document a panel, partly opening a roof opening in a manner as described in the previous sentence, is referred to as being in a tilt-position. An open roof system having such a panel capable of moving only to such tilt-position is usually referred to as a "pop-up" roof system, which reference is used further in this document. Other well-known open roof systems have a panel which may move in such a way that apart from the tilt-position of the panel, a further opening of the roof opening is possible by sliding the panel to the rear either above the surface of the fixed roof of the vehicle, the so called "Top slider" roof systems, or sliding below the fixed roof surface, the so called "Tilt-Vent-Slider" or "TVS" roof systems. Both of these references are used further in this document. Each of these prior art roof systems may have a tilt-position of the movable panel, which is usually the front panel of the open roof system.

It is also known that vehicles may comprise roof rails connected on to the lateral edges of the fixed roof of the vehicle. Such roof rails hereunder referred to as roof members may be used to connect transvers placed roof racks for instance for use of carrying luggage or sport utility devices.

In the prior art, it is known that vehicles having an open roof system may also have roof members. In such cases the lateral edges of the roof opening and therewith the lateral edges of the panel of the open roof system are positioned at a certain distance away from the roof members. The head space available for the occupants inside the vehicle is compromised by the stationary frame of the open roof system. The gap between the lateral side edge of the panel and the lateral edge of the roof opening in a tilt-position of the panel may cause considerable aero-acoustic noises under driving conditions of the vehicle.

DE 41 42 265 discloses an open roof system according to the preamble of claim 1. It comprises a roof rail having a vertical cover against which a side edge seal of the panel may seal when the panel is in a tilt position.

It is an object of the present invention to provide an open roof system for a vehicle having an improved headspace for the occupants and an improved aero-acoustic performance when the panel of the open roof construction is in a tilt-position.

This object is achieved in an open roof system for a vehicle according to claim 1.

The roof member is usually placed on the fixed roof, on top of the joints of the different vehicle body parts. More precisely on top of the joint between the roof body panel and the side body part. The lateral edge of the roof opening and therewith the lateral edge of the panel is positioned adjacent to the roof member. This allows the panel comprising the seal, to be engaged with the roof member at least when the panel is in the tilt-position. This engagement is an airtight engagement such that no air leaks through the seal in the lateral areas of the panel. This reduces the aero-acoustic noises coming from the lateral edges of the panel in the tilt-position. Compared with the prior art, the increased width of the panel, having the lateral edges of the panel adjacent to the roof member, the stationary frame of the open roof construction connected to the fixed roof on the inside of the vehicle may be positioned sideways in a lateral direction outwards. Due to this the headspace of the occupants in the front and the rear of the vehicle increases because of the stationary frame being positioned more outwardly compared to the prior art. This is especially advantageous in electric vehicles whereby the headspace is compromised because of the occupant seats being positioned at a higher level in the vehicle, to allow the battery package to be stored underneath the level of the seat rails.

In another aspect of the invention, in the tilt-position of the panel, in which the roof opening is partly open, the seal of the panel is in an airtight engagement with a front edge of the roof opening and a rear edge of the panel is above a plane defined by the roof opening in the fixed roof. In such position of the panel both lateral side edges are in airtight engagement with the first edge of the respective roof members, and also the front edge of panel is in an airtight engagement with the front edge of the roof opening. This adds to the suppression of aero-acoustic noises coming from the panel in a tilt-position.

According to another aspect of the invention the panel comprises a top surface, which surface is flush with the surface of the fixed roof when the roof opening is closed by the panel and wherein the top surface of the panel is substantially flush with a roof member top surface, at least along a part of the longitudinal length of the roof member, in a tilt-position of the panel in which the roof opening is partly open. Apart from the previously mentioned advantageous aspects of improved head space and improved aero-acoustic performance, also the esthetical aspect is one of importance. The roof member usually has a cross section which is substantially the same along its whole length. Only the front end and the rear end of the roof member may have a gradually changing section. In this type of roof member, it is possible to have the front connections of the transvers roof racks relatively in the frontal part of the roof members and the rear connections of the transverse roof racks in the rear part of the roof member. It is however also conceivable that the roof member has a frontal part such that its section gradually grows from its front roughly towards the area where the panel has its rear edge. The height of the roof member and therewith the roof member top surface along its frontal part equals the height of the panel when the panel is in a tilt-position. In such position of the panel, the styling of the open roof system may be aesthetically improved.

According yet another embodiment, the roof member is partly attached to the fixed roof and partly to the stationary frame. It may be conceivable to have the roof members integrated to the stationary frame of the open roof system. In such an embodiment the roof members may be part of the delivery content of the open roof construction towards the end customer.

The first edge of the roof member may comprise a third protrusion in a lateral inward direction of the vehicle, with which the seal of the panel is in an airtight engagement when the panel is in an intermediate tilt-position in which the roof opening is partly open having a reduced opening.

According to the invention, the first edge comprises a first and second protrusion or a first, second and third protrusion oriented to the longitudinal middle of the vehicle. The respective protrusions are required to have an engagement surface for the seal such that the seal is pressed in enough to give an airtight engagement. The third protrusion may be positioned on the first edge of the roof member in between the first and the second protrusion. The third protrusion may be used in case the panel is required to have an intermediate tilt-position also referred to as a partly open position.

According to yet another aspect of the invention, the seal may move freely along the first edge of the roof member in areas adjacent the first, second and third protrusions when the panel moves from a closed position where it closes the roof opening to a tilt-position when the roof opening is partly open and vice versa.

Whereas the seal must have an airtight engagement with the protrusions when the panel is in a tilt-position or closed position. When the panel moves in between the closed and the tilt-positions, the seal may not be obstructed such that the movement induces noises, such as for instance squeak noises coming from the seal. As such the seal must be able to move freely between the closed position and the tilt-position.

It may be conceivable that with a seal of a particular material having a low coefficient of friction and/or the use of a slip coat on the surface of the seal the phenomenon of squeaking is avoided when the seal is pressed and moved at the same time.

According to another aspect of the invention the protrusions have a height H above the surface of the first edge in a range of 0,4 mm. to 9 mm. and more in particular in a range of 1,2 mm. to 3 mm. The seal in an airtight engagement with a protrusion must be pressed by a certain depth. This depth is created by the position of the seal on a lateral edge of the panel on one side and the protrusion on the first edge on the opposite side. Due to the various tolerance stacks that may occur in the various embodiments of the invention and the requirement of having an airtight sealing between seal and the roof member, the protrusions need to have a certain height H in above mentioned ranges.

The roof member may comprise protrusions which are made of a material different to that of the roof member and wherein the protrusions are made of Polyurethane (PU) or glass fibre reinforced Polypropylene (PP/GF) or Polyamide (PA) or Polyoxymethylene(POM) or similar materials of the same respective family of materials.

It may be conceivable to make the protrusions of different material then that of the roof members. The roof member is usually made of aluminium for instance by an extrusion process, or a casting process. And coated with coating. In case the protrusions are made of another material, such as the materials indicated above, specific characteristics may be used of this material for instance in relation to a low coefficient of friction, low wear of the coating, avoidance of the phenomena of slip-stick, etc.

According to yet another embodiment in a closed position of the panel in which the roof opening is closed, the seal engagement is with a closing edge of the stationary frame. It may be conceivable that the second protrusion, the protrusion required to have an airtight engagement with the seal when the panel closes the roof opening is not formed on the first edge of the roof member but by means of the closing edge formed on the stationary frame. This may be advantageous to control the water management of the open roof constructions.

The invention also includes vehicle having an open roof system as described above.

Further details and advantages of the invention follow from the description below with reference to the drawings in which:
Fig. 1A is a schematic perspective view of a vehicle roof having an open roof system according to the invention.
Fig. 1B is a plan view of the open roof system and part of the fixed roof.
Fig. 2A and 2B are sectional views across the open roof system according to line II-II in Fig. 1B, whereby Fig.2A shows the panel in a closed position and Fig. 2B shows the panel in a tilt-position.
Fig. 3 is a sectional view of the open roof system according to line III-III in Fig. 1B.
Fig. 4 is a sectional view of the open roof system according to line IV-IV in Fig. 1B.
Fig. 5A is a detailed view of area VA in Fig. IV.
Fig. 5B is a detailed view of area VB in Fig. 5A
Fig. 6 is a detailed sectional view similar as Fig. 5A, of a second embodiment of the invention.
Fig. 7 is a detailed sectional view similar as Fig. 5A, of a third embodiment of the invention.
Fig. 8 is a sectional view similar as Figs. 2A or 2B of a fourth embodiment in which the panel is drawn in two positions.
Fig. 9 is a sectional view similar as in Fig. 5A of a fifth embodiment of the invention.
Fig. 10 is a sectional view similar as in Fig. 5A of a sixth embodiment of the invention.
Fig. 11 is a sectional view similar as in Fig. 5A of a seventh embodiment not belonging to the invention.

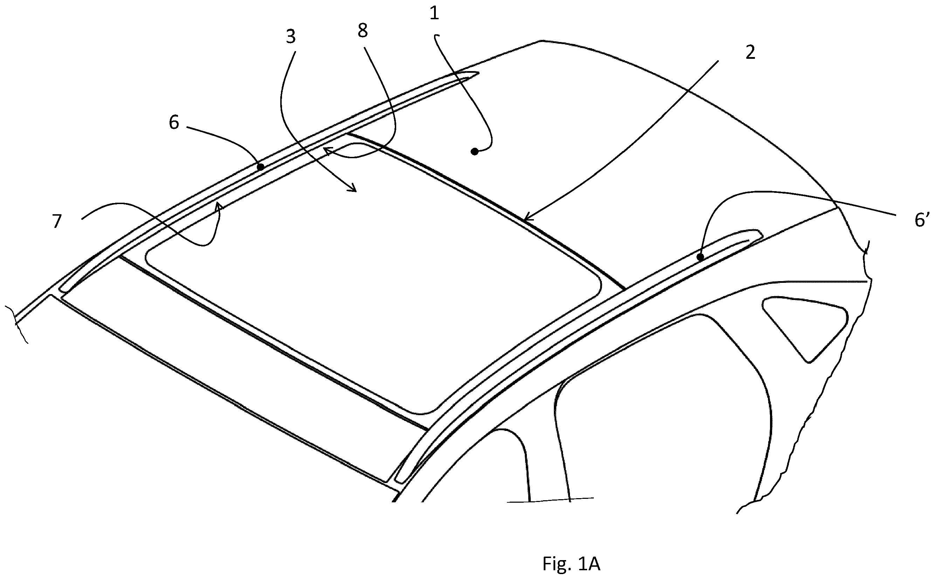

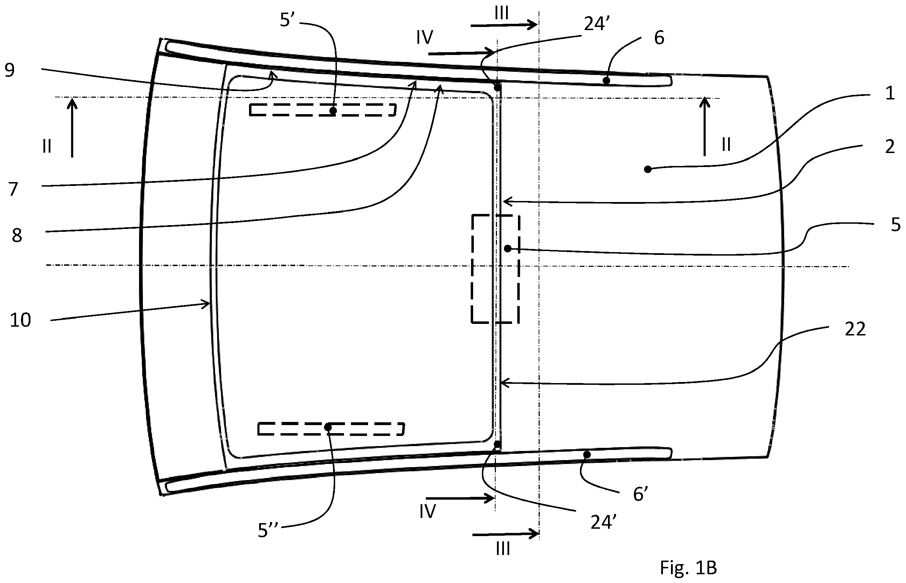

Referring to Fig. 1A a vehicle roof is shown having an open roof assembly, a roof opening 2 in a fixed roof 1, a pair of roof members 6, 6'. The open roof system shown is a so-called pop-up roof whereby the panel 3 of the open roof system is capable of being moved from a position whereby the panel 3 closes the roof opening 2 (closed position) to a position wherein the panel 3 at least partly opens the roof opening 2 (tilt-position). In Fig.1 the panel 3 is drawn in its closed position, however the panel 3 may be lifted by means of a mechanism 5, 5' connected between the stationary frame 4 and the panel 3, to a tilt-position, such that an opening is created between the rear edge 22 of the panel 3 and the edge of the roof opening 2. Further in Fig. 1 a pair of roof members 6, 6' is shown on both lateral side edges 8, 8' of the fixed roof 1. The roof members 6, 6' extend in a longitudinal direction from the front of the fixed roof 1 towards the rear of the fixed roof 1 and the roof members 6, 6' are fixed to the body on several places by means of fixing members 25.

In the tilt-position the panel 3 is in engagement with the edge of the roof opening 2 at the front edge 10 by means of the seal 7. The lateral side edges 8, 8' of the panel 3 are also in engagement with the roof members 6, 6', via the seal 7, such that no air leakage may occur in that area. In this tilt-position of the panel 3, air inside the vehicle may flow to the environment or vice versa. It is also conceivable that another type of open roof system is used in relation to the invention, for instance a top slider roof system may be used whereby the panel 3 of this type of roof, not only may be positioned in a tilt-position, but also may slide to the rear above the surface of the fixed roof 1 by means of mechanisms 5, 5' that are connected between the stationary frame 4 and the panel 3. In case such a top slider roof is used in the vehicle, the airtight engagement of the seal 7 on the panel 3 towards the roof member 6, 6' is only favourable in the tilt-position of the panel 3 and not when the panel 3 is in a fully open position, whereby the panel 3 is slid over the fixed roof 1 to the rear.

Referring to Fig. 1B the open roof system is shown in a plan view. The shape of the panel 3 is tapered, whereby the frontal part of the panel 3 is larger seen in a transversal direction of the vehicle and the rear part is smaller in transversal direction. As can be seen from Fig. 1B, the lateral side edges 8, 8' of the panel 3 follow a curved line. The lateral side edges 8, 8' of the roof opening 2 are parallel to the same curved lines of the panel 3. And also the roof members 6, 6' left and right follow in parallel the curvature of the lateral side edges 8, 8' of the panel 3. In case the open roof system is a pop-up roof the panel 3 only needs to be moved between a closed and a tilt-position, whereby in the tilt-position, the panel 3 is lifted at its rear edge 22 a certain distance. The tapered shape of the panel 3 in such case, allows the panel 3 to be tilted at its rear edge 22, without being jammed between the roof members 6, 6'. In case the open roof system is a top slider roof system (not shown in the drawings), the panel 3 also may be positioned into a tilt-position. However, because of the additional function of sliding the panel 3 to the rear, over the fixed roof 1, the shape of the panel 3 may not be tapered, because it would be jammed between the opposite mounted roof members 6, 6'. So in such case that a top slider roof system is used, it is required that the lateral side edges 8, 8' of the panel 3 are straight and parallel to a central longitudinal plane of the vehicle. This means that in line what is described above, the lateral side edges 8, 8' of the roof opening 2 and the longitudinal shape of the roof members 6, 6' also need to be in parallel with the central longitudinal plane of the vehicle.

In Fig. 1B the mechanisms 5, 5' are shown in dotted lines. Generally, in all types of open roof systems the mechanisms 5, 5' are connected between the stationary frame 4 and the lower side of the panel 3 and the function of the mechanisms 5, 5' are to move the panel 3 in a vertical direction or in a vertical and horizontal direction. In case a Pop-up roof is used as an open roof system, the mechanisms 5, 5' may be placed in area's adjacent to both lateral side edges 8, 8' of the panel 3. It is also conceivable that the mechanism 5, 5' is placed in a central area adjacent to the rear edge 22 of the panel. The open roof system shown in Fig. 1B has only one panel 3 and the rear part of the fixed roof 1 is part of the steel body of the vehicle. It is however conceivable that the open roof system is equipped with more than one panel 3, whereby a second or a multitude of panels are positioned adjacent in rearward direction of the first movable panel 3. Also it is shown that in front of the movable panel 3 a front header plate is shown, this front header plate usually is not movable, however it is conceivable that the front header plate is part of a movable wind deflector.

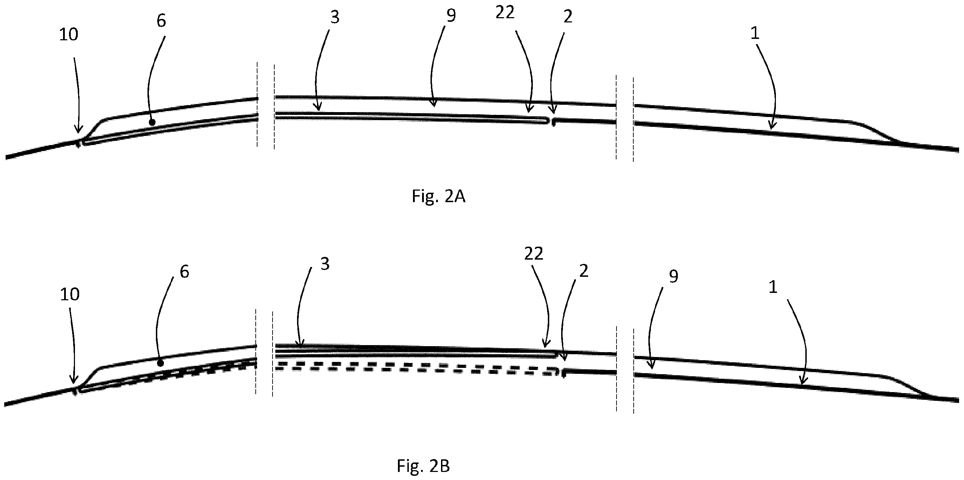

In Figs. 2A and 2B a sectional view is shown of the panel 3 and the adjacent roof member 6, 6'. In Fig. 2A the panel 3 is shown in its closed position, closing the roof opening 2, and Fig. 2B shows the panel 3 in tilt-position, partly opening the roof opening 2. The panel 3 in its tilt-position with its lateral side edges 8, 8' engages the roof member's first edge 9, 9'. This ensures that no air escapes through the seal 7 in the panels' lateral side edge 8, 8', which is advantageous in relation to the aero acoustic performance in driving conditions. In Fig. 2B the rear edge 22 of the panel 3 in the area of the lateral side edges 8, 8' of the panel 3, referred to as the corner edge 24, 24' of the panel 3, is flush with the top surface 12, 12' of the roof member 6, 6'. This gives an optimal esthetical impression of the open roof system in a tilt-position. It is however conceivable that the corner edge 24, 24' of the panel 3 protrudes above the top surface 12, 12' of the roof member 6, 6'. This could be required when the rear opening between the rear edge 22 of the panel 3 and the rear edge of the roof opening 2 needs to be designed to be enlarged for ventilation purposes.

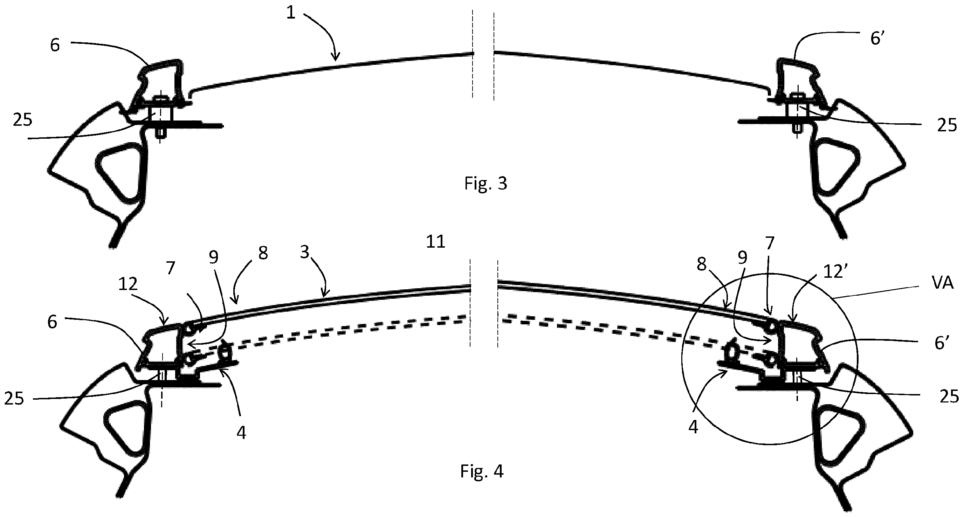

In Figs. 3 and 4 a cross sectional view is shown along line III-III and IV-IV in fig 1B, whereby Fig. 3 shows a cross section through the fixed roof 1 and the fixing members 25 between the roof member 6, 6' and the fixed roof 1. Fig. 4 shows a cross section across a rear part of the panel 3 adjacent to the rear edge 22 of the panel 3. Here the panel 3 is shown in a closed position in which the roof opening 2 is closed (dotted lines) and in a tilt-position. In this Fig. 4 it is clearly shown that the rear edge 22 of the panel 3 is substantially flush with the top surface 12, 12' of the roof member 6, 6'. Also, the stationary frame 4 is shown with a secondary seal engaging the lower side of the panel 3 when the panel is in a closed position.

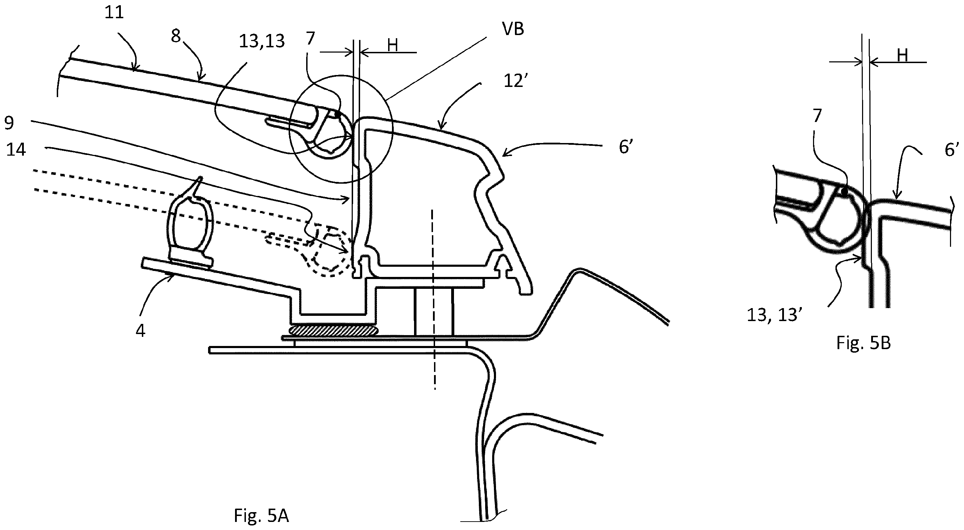

Fig. 5A is a blown-up view VA in Fig. 4, wherein the roof member 6, 6' section is shown as a closed section. This closed section may extend longitudinally along the complete roof member 6, 6'. However, it is also conceivable that the section of the roof member 6, 6' is only closed in areas where the roof member 6, 6' has a fixing member 25 towards the fixed roof 1. The stationary frame 4 is shown and in this embodiment the frame 4 extends underneath the roof member 6, 6' and may support the roof member 6, 6' along the areas where the roof member 6, 6' is not supported by its fixing members 25.

The stationary frame 4 may be glued to the fixed roof 1 as is known in the art, but it is also conceivable that it is screwed to the body. The stationary frame 4 may be made of plastic (either reinforced or not) or steel, it can be made of one part or it can be made of multiple parts. The roof member 6, 6' in this embodiment comprises a first and a second protrusion 13,13';14, 14', protruding out of its first edge 9, 9'. The first protrusion 13, 13' is created at the top surface of the first edge 9, 9' and ensures that the seal 7 on the panel 3, when the panel 3 is in its tilt-position, is in an airtight engagement with the roof member 6, 6'. Similarly, the second protrusion 14, 14' is created at the bottom surface of the first edge 9, 9' of the roof member 6, 6' to ensure that the seal 7 of the panel 3 is in an airtight engagement with the roof member 6, 6' when the panel 3 is in a closed position.

In Fig. 5B a further blown-up drawing, the seal 7 is drawn through the first protrusion 13, 13' to shown how much the seal 7 will actually be deformed by the protrusion. Here the seal 7, which is typically a bulb seal, in the tilted position of the panel 3, is pressed in by the first protrusion 13, 13' by a certain depth. The depth of the deformation or pressing of the seal 7 is an important feature and is required for the air tightness in driving conditions. So the protrusion height H determines the pressing depth of the seal 7 and therewith the airtight sealing.

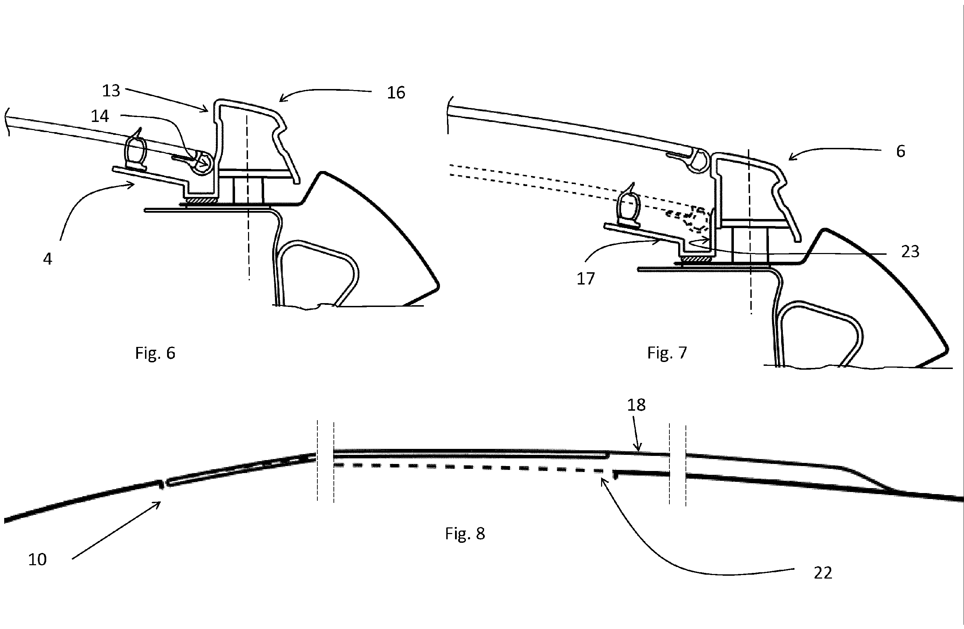

Fig. 6 shows a sectional view across the open roof system showing another embodiment of the roof member 16, 16'. The roof member 16, 16' and the stationary frame 4 are integrated to one part. This embodiment may be advantageous in relation to the water management of the open roof system. Since the roof member 16, 16' and stationary frame 4, in this embodiment, do not have any gaps between them. The water in the so-called wet area may not leak through small gaps between the roof member 16, 16' and the stationary frame 4. As a result, countermeasures for water tightness between these parts may be omitted.

Fig. 7 shows a sectional view across the open roof system showing another embodiment of the stationary frame 17 whereby the stationary frame 17 comprises a closing edge 23 (i.e. a second protrusion) to which the panel 3 with the seal 7 may be in airtight engagement when the panel 3 is in its closed position.

Fig. 8 shows a cross section in a longitudinal direction by which another embodiment of the roof member 18, 18' is shown. In this embodiment the longitudinal shape of the roof member 18, 18' along its length from the front to the rear is made such that the roof member top surface 12, 12' is flush with surface of the panel 3 in the lateral side area of the panel 3 all along the longitudinal length of the panel 3.

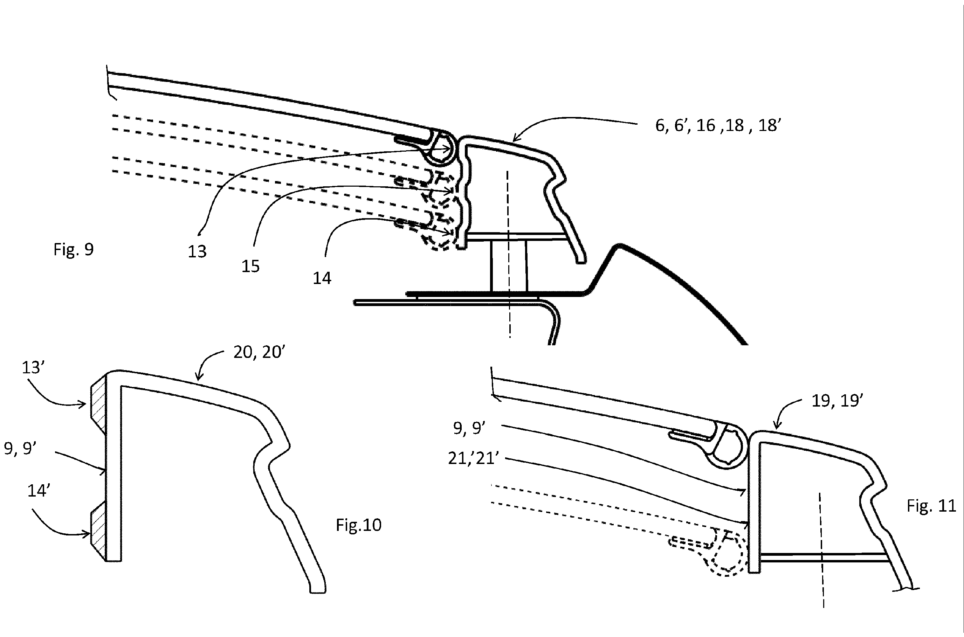

Fig. 9 shows a cross sectional view of the open roof system whereby the roof member 6, 6' is equipped with three protrusions. The first protrusion 13, 13' is at the upper end of the first edge 9, 9' of the roof member 6, 6' and the seal 7 is engaged in by this protrusion when the panel 3 is in a tilt-position, wherein the opening between the rear edge 22 of the panel 3 and the rear edge of the roof opening 2 is at its maximum. And a second protrusion 14, 14' used for sealing the panel 3 in the closed position of the panel 3. And further a third protrusion 15, 15' in between the first and the second protrusions 13, 13'; 14, 14' for sealing the panel 3 in a maximum size tilt-position and a closed position.

Fig. 10 shows an embodiment of the roof member 20, 20' whereby the protrusions 13, 13';14, 14' are made of another material than the usual material of the roof member 6, 6'. These protrusions 13, 13'; 14, 14' may be made of Polyurethane (PU) or glass fibre reinforced Polypropylene (PP/GF) or Polyamide (PA) or Polyoxymethylene(POM) or similar materials of the same respective family of materials, whereby these materials may be connected to the base part of the roof member 20, 20' by either of gluing, welding or by being form fitted by means of extruded shapes into openings in the first edges 9,9' of the roof members 20, 20' .

Fig. 11 shows an embodiment whereby the roof member 19, 19' is equipped with a first protrusion 21, 21' which extends over the whole surface of the first edge 9, 9' of the roof member 19, 19'. This means that the seal 7 is not only pressed in both of the closed positions and tilt-positions of the panel 7 but also when moving the panel 7 in between these two positions. The interference of the seal 7 and the first protrusion 21, 21' in this embodiment is likewise within the range H indicated in this document previously.

Aspects of the invention are not limited to the embodiments described before which may be varied widely within the scope of the invention as defined in the appended claims.

## Claims

1. Open roof system for a vehicle comprising a fixed roof (1) having a roof opening (2), comprising a semi-transparent panel (3) for closing and at least partly opening said roof opening (2), a stationary frame (4, 17) configured to be fixedly attached to the fixed roof (1), at least one mechanism (5, 5', 5") provided between the panel (3) and the stationary frame (4, 17) for moving the panel (3), and a roof member (6, 6'; 16; 18, 18'; 19, 19'; 20, 20') protruding from the fixed roof (1) in an upward direction when said roof member is attached at least partly to the fixed roof (1), said panel (3) comprising a seal (7) connected at least along the front edge (10) and both lateral side edges (8, 8') of the panel (3), wherein the seal (7) is in an airtight engagement with at least a part of a first edge (9, 9') of the roof member (6, 6'; 16; 18, 18'; 19, 19'; 20, 20') in a tilt-position of the panel (3) in which the roof opening (2) is partly open, such that aero-acoustic noises are at least reduced in said tilt-position of the panel, **characterized in that** the first edge (9, 9') of the roof member (6, 6'; 16; 18, 18'; 20, 20') comprises at least a first protrusion (13, 13') in a lateral inward direction of the vehicle, with which the seal (7) of the panel (3) is in an airtight engagement when the panel (3) is in a tilt-position in which the roof opening (2) is partly open, and **in that** the first edge (9, 9') of the roof member (6, 6'; 16; 18, 18'; 20, 20') comprises a second protrusion (14, 23) in a lateral inward direction of the vehicle, with which the seal (7) of the panel (3) is in an airtight engagement when the panel (3) is in a closed position in which the roof opening (2) is closed.

2. The open roof system according to claim 1, wherein in the tilt-position of the panel (3) in which the roof opening (2) is partly open, the seal (3) of the panel (3) is in an airtight engagement with a front edge (10) of the roof opening (2) and a rear edge (22) of the panel (3) is above a plane defined by the roof opening (2) in the fixed roof (1).

3. The open roof system according to claim 1, wherein the panel (3) comprises a top surface (11), which surface is flush with the surface of the fixed roof (1) when the roof opening (2) is closed by the panel (3) and wherein the top surface (11) of the panel (3) is substantially flush with a roof member top surface (12, 12'), at least along a part of the longitudinal length of the roof member (6, 6'), in a tilt-position of the panel (3) in which the roof opening (2) is partly open.

4. The open roof system according to claim 1, wherein the roof member (16) is partly attachable to the fixed roof (1) and partly attached to the stationary frame (4).

5. The open roof system according to any of the preceding claims, wherein the first edge (9, 9') of the roof member (6, 6'; 18, 18'; 20, 20') comprises a third protrusion (15, 15') in a lateral inward direction of the vehicle, with which the seal (7) of the panel (3) is in an airtight engagement when the panel (3) is in an intermediate tilt-position in which the roof opening (2) is partly open having a reduced opening.

6. The open roof system according any of the preceding claims, wherein the seal (7) may move freely along the first edge (9, 9') of the roof member (6, 6'; 18, 18'; 20, 20') in areas adjacent the first, second and third protrusions (13, 13'; 14, 14'; 15, 15') when the panel (3) moves from a closed position where it closes the roof opening (2) to a tilt-position when the roof opening (2) is partly open and vice versa.

7. The open roof system according to any of the preceding claims , wherein the protrusions (13, 13'; 14, 14'; 15, 15'; 21, 21') have a height H above the surface of the first edge in a range of 0,4 mm. to 9 mm. and more in particular in a range of 1,2 mm. to 3 mm.

8. The open roof system according to any of the preceding claims, wherein the roof member (20, 20') comprises protrusions (13, 13'; 14, 14'; 15, 15'; 21, 21) which are made of a material different to that of the roof member (6, 6'; 16, 18, 18'; 19, 19') and wherein the protrusions are made of Polyurethane (PU) or glass fibre reinforced Polypropylene (PP/GF) or Polyamide (PA) or Polyoxymethylene(POM) or similar materials of the same respective family of materials.

9. The open roof system according to claim 1, wherein in a closed position of the panel (3) in which the roof opening (2) is closed, the seal engagement is with a closing edge (23, 23') of the stationary frame (4) forming the second protrusion on the first edge (9, 9').

10. A vehicle having an open roof system according to any of the preceding claims.

## Patentansprüche

1. Offendachsystem für ein Fahrzeug mit einem festen Dach (1), welches eine Dachöffnung (2) aufweist, aufweisend ein semitransparentes Paneel (3) zum Schließen und zumindest teilweisen Öffnen der Dachöffnung (2), einen stationären Rahmen (4, 17), welcher dazu eingerichtet ist, fest an dem festen Dach (1) angebracht zu sein, mindestens einen Mechanismus (5, 5', 5"), welcher zwischen dem Paneel (3) und dem stationären Rahmen (4, 17) zum Bewegen des Paneels (3) vorgesehen ist, und ein Dachelement (6, 6'; 16; 18, 18'; 19, 19'; 20, 20'), welches von dem festen Dach (1) aus in einer Aufwärtsrichtung vorsteht, wenn das Dachelement zumindest teilweise an dem festen Dach (1) angebracht ist, wobei das Paneel (3) eine Dichtung (7) aufweist, welche zumindest entlang des Vorderrands (10) und beider lateraler Seitenränder (8, 8') des Paneels (3) verbunden ist, wobei die Dichtung (7) mit zumindest einem Teil eines ersten Rands (9, 9') des Dachelements (6, 6'; 16; 18, 18'; 19, 19'; 20, 20') in einer Kippstellung des Paneels (3), in welcher die Dachöffnung (2) teilweise offen ist, in einem luftdichten Eingriff steht, so dass aeroakustische Geräusche in der Kippstellung des Paneels zumindest reduziert werden, **gekennzeichnet dadurch, dass** der erste Rand (9, 9') des Dachelements (6, 6'; 16; 18, 18'; 20, 20') mindestens einen ersten Vorsprung (13, 13') in einer lateralen Einwärtsrichtung des Fahrzeugs aufweist, mit welchem die Dichtung (7) des Paneels (3) in einem luftdichten Eingriff steht, wenn sich das Paneel (3) in einer Kippstellung, in welcher die Dachöffnung (2) teilweise offen ist, befindet, und dadurch, dass der erste Rand (9, 9') des Dachelements (6, 6'; 16; 18, 18'; 20, 20') einen zweiten Vorsprung (14, 23) in einer lateralen Einwärtsrichtung des Fahrzeugs aufweist, mit welchem die Dichtung (7) des Paneels (3) in einem luftdichten Eingriff steht, wenn sich das Paneel (3) in einer GeschlossenStellung, in welcher die Dachöffnung (2) geschlossen ist, befindet.

2. Das Offendachsystem nach Anspruch 1, wobei in der Kippstellung des Paneels (3), in welcher die Dachöffnung (2) teilweise offen ist, die Dichtung (3) des Paneels (3) in luftdichtem Eingriff mit einem vorderen Rand (10) der Dachöffnung (2) steht und ein hinterer Rand (22) des Paneels (3) oberhalb einer durch die Dachöffnung (2) im festen Dach (1) definierten Ebene liegt.

3. Das Offendachsystem nach Anspruch 1, wobei das Paneel (3) eine obere Fläche (11) aufweist, welche Fläche mit der Fläche des festen Dachs (1) bündig ist, wenn die Dachöffnung (2) durch das Paneel (3) verschlossen ist, und wobei die obere Fläche (11) des Paneels (3) im Wesentlichen mit einer oberen Fläche (12, 12') des Dachelements, zumindest entlang eines Teils der Längslänge des Dachelements (6, 6'), in einer Kippstellung des Paneels (3), in welcher die Dachöffnung (2) teilweise offen ist, bündig ist.

4. Das Offendachsystem nach Anspruch 1, wobei das Dachelement (16) teilweise an dem festen Dach (1) und teilweise an dem stationären Rahmen (4) befestigbar ist.

5. Das Offendachsystem nach einem der vorhergehenden Ansprüche, wobei der erste Rand (9, 9') des Dachelements (6, 6'; 18, 18'; 20, 20') einen dritten Vorsprung (15, 15') in einer lateralen Einwärtsrichtung des Fahrzeugs aufweist, mit welchem die Dichtung (7) des Paneels (3) in einem luftdichten Eingriff steht, wenn sich das Paneel (3) in einer Zwischenkippstellung, in welcher die Dachöffnung (2) mit einer reduzierten Öffnung teilweise offen ist, befindet.

6. Das Offendachsystem nach einem der vorhergehenden Ansprüche, wobei sich die Dichtung (7) entlang des ersten Rands (9, 9') des Dachelements (6, 6'; 18, 18'; 20, 20') in Bereichen benachbart zu dem ersten, dem zweiten und dem dritten Vorsprung (13, 13'; 14, 14'; 15, 15') frei bewegen kann, wenn sich das Paneel (3) von einer GeschlossenStellung, in welcher es die Dachöffnung (2) verschließt, in eine Kippstellung, in welcher die Dachöffnung (2) teilweise offen ist, bewegt und umgekehrt.

7. Das Offendachsystem nach einem der vorhergehenden Ansprüche, wobei die Vorsprünge (13, 13'; 14, 14'; 15, 15'; 21, 21') eine Höhe H über der Fläche des ersten Rands in einem Bereich von 0,4 mm bis 9 mm und insbesondere in einem Bereich von 1,2 mm bis 3 mm aufweisen.

8. Das Offendachsystem nach einem der vorhergehenden Ansprüche, wobei das Dachelement (20, 20') Vorsprünge (13, 13'; 14, 14'; 15, 15'; 21, 21) aufweist, welche aus einem anderen Material als das Dachelement (6, 6'; 16, 18, 18'; 19, 19') hergestellt sind, und wobei die Vorsprünge aus Polyurethan (PU) oder glasfaserverstärktem Polypropylen (PP/GF) oder Polyamid (PA) oder Polyoxymethylen (POM) oder ähnlichen Materialien der gleichen jeweiligen Materialfamilie hergestellt sind.

9. Das Offendachsystem nach Anspruch 1, wobei in einer Geschlossen-Position des Paneels (3), in welcher die Dachöffnung (2) verschlossen ist, der Dichtungseingriff mit einem Schließrand (23, 23') des stationären Rahmens (4) erfolgt, welcher den zweiten Vorsprung am ersten Rand (9, 9') bildet.

10. Ein Fahrzeug mit einem Offendachsystem nach einem der vorhergehenden Ansprüche.

## Revendications

1. Système de toit ouvert pour un véhicule comprenant un toit fixe (1) présentant une ouverture de toit (2), comprenant un panneau semi-transparent (3) pour la fermeture et l'ouverture au moins partielle de ladite ouverture de toit (2), un cadre stationnaire (4, 17) configuré pour être fixement attaché au toit fixe (1), au moins un mécanisme (5, 5', 5") prévu entre le panneau (3) et le cadre stationnaire (4, 17) pour déplacer le panneau (3), et un élément de toit (6, 6' ; 16 ; 18, 18' ; 19, 19' ; 20, 20') faisant saillie du toit fixe (1) dans une direction vers le haut lorsque ledit élément de toit est attaché au moins partiellement au toit fixe (1), ledit panneau (3) comprenant un joint d'étanchéité (7) relié au moins le long de l'arête avant (10) et des deux arêtes de côté latérales (8, 8') du panneau (3), dans lequel le joint d'étanchéité (7) est dans un engagement étanche à l'air avec au moins une partie d'une première arête (9, 9') de l'élément de toit (6, 6' ; 16 ; 18, 18' ; 19, 19' ; 20, 20') dans une position inclinée du panneau (3), dans laquelle l'ouverture de toit (2) est partiellement ouverte de sorte que des bruits aéro-acoustiques soient au moins réduits dans ladite position inclinée du panneau, **caractérisé en ce que** la première arête (9, 9') de l'élément de toit (6, 6' ; 16 ; 18, 18' ; 20, 20') comprend au moins une première saillie (13, 13') dans une direction latérale vers l'intérieur du véhicule, avec laquelle le joint d'étanchéité (7) du panneau (3) est dans un engagement étanche à l'air lorsque le panneau (3) est dans une position inclinée, dans laquelle l'ouverture de toit (2) est partiellement ouverte, et **en ce que** la première arête (9, 9') de l'élément de toit (6, 6' ; 16 ; 18, 18' ; 20, 20') comprend une deuxième saillie (14, 23) dans une direction latérale vers l'intérieur du véhicule, avec laquelle le joint d'étanchéité (7) du panneau (3) est dans un engagement étanche à l'air lorsque le panneau (3) est dans une position fermée, dans laquelle l'ouverture de toit (2) est fermée.

2. Système de toit ouvert selon la revendication 1, dans lequel dans la position inclinée du panneau (3), dans laquelle l'ouverture de toit (2) est partiellement ouverte, le joint d'étanchéité (3) du panneau (3) est dans un engagement étanche à l'air avec une arête avant (10) de l'ouverture de toit (2) et une arête arrière (22) du panneau (3) est au-dessus d'un plan défini par l'ouverture de toit (2) dans le toit fixe (1).

3. Système de toit ouvert selon la revendication 1, dans lequel le panneau (3) comprend une surface supérieure (11), laquelle surface est en alignement sur la surface du toit fixe (1) lorsque l'ouverture de toit (2) est fermée par le panneau (3) et dans lequel la surface supérieure (11) du panneau (3) est sensiblement en alignement sur une surface supérieure de l'élément de toit (12, 12'), au moins le long d'une partie de la longueur longitudinale de l'élément de toit (6, 6'), dans une position inclinée du panneau (3), dans laquelle l'ouverture de toit (2) est partiellement ouverte.

4. Système de toit ouvert selon la revendication 1, dans lequel l'élément de toit (16) est partiellement attachable au toit fixe (1) et partiellement attaché au cadre stationnaire (4).

5. Système de toit ouvert selon l'une quelconque des revendications précédentes, dans lequel la première arête (9, 9') de l'élément de toit (6, 6' ; 18, 18' ; 20, 20') comprend une troisième saillie (15, 15') dans une direction latérale vers l'intérieur du véhicule, avec laquelle le joint d'étanchéité (7) du panneau (3) est dans un engagement étanche à l'air lorsque le panneau (3) est dans une position inclinée intermédiaire, dans laquelle l'ouverture de toit (2) est partiellement ouverte en présentant une ouverture réduite.

6. Système de toit ouvert selon l'une quelconque des revendications précédentes, dans lequel le joint d'étanchéité (7) peut se déplacer librement le long de la première arête (9, 9') de l'élément de toit (6, 6' ; 18, 18' ; 20, 20') dans des zones adjacentes aux première, deuxième et troisième saillies (13, 13' ; 14, 14' ; 15, 15') lorsque le panneau (3) se déplace d'une position fermée où il ferme l'ouverture de toit (2) dans une position inclinée lorsque l'ouverture de toit (2) est partiellement ouverte et vice versa.

7. Système de toit ouvert selon l'une quelconque des revendications précédentes, dans lequel les saillies (13, 13' ; 14, 14' ; 15, 15' ; 21, 21') présentent une hauteur H au-dessus de la surface de la première arête dans une plage de 0,4 mm à 9 mm et plus particulièrement dans une plage de 1,2 mm à 3 mm.

8. Système de toit ouvert selon l'une quelconque des revendications précédentes, dans lequel l'élément de toit (20, 20') comprend des saillies (13, 13' ; 14, 14' ; 15, 15' ; 21, 21) qui sont réalisées en un matériau différent de celui de l'élément de toit (6, 6' ; 16, 18, 18' ; 19, 19') et dans lequel les saillies sont réalisées en polyuréthane (PU) ou polypropylène renforcé par des fibres de verre (PP/GF) ou polyamide (PA) ou polyoxyméthylène (POM) ou matériaux similaires de la même famille respective de matériaux.

9. Système de toit ouvert selon la revendication 1, dans lequel dans une position fermée du panneau (3), dans laquelle l'ouverture de toit (2) est fermée, l'engagement étanche est réalisé avec une arête de fermeture (23, 23') du cadre stationnaire (4) formant la deuxième saillie sur la première arête (9, 9').

10. Véhicule présentant un système de toit ouvert selon l'une quelconque des revendications précédentes.
